# EUROPEAN PATENT APPLICATION

(11) **EP 4 797 649 A1**
(43) Date of publication of application: **26.08.2026**
(21) Application number: 24890529.1
(22) Date of filing: 04.11.2024
(51) Int. Cl.: H04L 47/11

(54) **COMMUNICATION METHOD AND APPARATUS, AND STORAGE MEDIUM**

(30) Priority: 17.11.2023 CN 202311554377
(71) Applicant: HUAWEI TECHNOLOGIES CO., LTD., Shenzhen 518129 (CN)
(72) Inventor: HAN, Yuankun, Shenzhen, Guangdong 518129 (CN); LI, Zhaoliang, Shenzhen, Guangdong 518129 (CN)
(74) Representative: Goddar, Heinz J.
(86) International application number: PCT/CN2024/129757
(87) International publication number: WO 2025/103172

(57) **Abstract**

This application discloses a communication method and apparatus, and a storage medium, and pertains to the communication field. The method is applied to a gateway, and service data of a first service is transmitted between a server and a terminal device via the gateway. The method includes: when a first link between the gateway and the terminal device is congested, obtaining first information, where the first information identifies the first service on the server; and sending a first congestion notification message to the server, where the first congestion notification message includes the first information, and the first congestion notification message indicates the server to reduce, based on the first information, a rate at which the service data of the first service is sent. This application can be used to stop congestion of the first link and improve efficiency of sending the service data.

## Description

This application claims priority to Chinese Patent Application No. 202311554377.7, filed on November 17, 2023 and entitled "COMMUNICATION METHOD AND APPARATUS, AND STORAGE MEDIUM", which is incorporated herein by reference in its entirety.

### TECHNICAL FIELD

This application relates to the communication field, and in particular, to a communication method and apparatus, and a storage medium.

### BACKGROUND

For a gateway used to connect a cloud to the Internet, the gateway can forward data between the cloud and the Internet. For example, the Internet includes a terminal device, and the cloud includes a server. When the terminal device needs to request a service from the server, the terminal device sends a service request to the gateway, and the gateway forwards the service request to the server. The server sends service data to the gateway based on the service request, and the gateway forwards the service data to the terminal device.

Generally, the transmission rate of the Internet is less than that of the cloud. As a result, the bandwidth of a first link established between the gateway and the terminal device in the Internet is less than that of a second link established between the gateway and the server in the cloud. In this case, when the gateway receives, over the second link, the service data sent by the server, and forwards the service data to the terminal device over the first link, the first link may be congested. To avoid congestion of the first link, the gateway may obtain a throughput of service data transmitted over the first link, and discard service data that is not forwarded when the throughput exceeds a threshold.

The bandwidth of the first link in the Internet dynamically changes. Sometimes the bandwidth of the first link is small, which makes it impossible for the throughput of the service data transmitted over the first link to exceed the threshold. In this case, the gateway does not discard the service data that is not forwarded, and consequently, the first link is always congested. In addition, for the discarded service data that is not forwarded, the server needs to resend the discarded service data, leading to low efficiency of sending the service data.

### SUMMARY

This application provides a communication method and apparatus, and a storage medium, to stop congestion of a first link between a gateway and a terminal device and improve efficiency of sending service data. The technical solutions are as follows.

According to a first aspect, this application provides a communication method. The method is applied to a gateway, and service data of a first service is transmitted between a server and a terminal device via the gateway. In the method, when a first link between the gateway and the terminal device is congested, first information is obtained, where the first information identifies the first service on the server. A first congestion notification message is sent to the server, where the first congestion notification message includes the first information, and the first congestion notification message indicates the server to reduce, based on the first information, a rate at which the service data of the first service is sent.

When the first link is congested, the gateway sends the first congestion notification message to the server, where the first congestion notification message includes the first information identifying the first service on the server. In this way, the server can actively reduce, based on the first information, the rate at which the service data of the first service is sent, so that the rate at which the server sends the service data of the first service is less than a rate at which the service data of the first service is transmitted over the first link between the gateway and the terminal device, to stop congestion of the first link. Because when the first link is congested, the server actively reduces, based on the first information, the rate at which the service data of the first service is sent, the gateway does not need to discard the service data, so that the server does not need to resend the service data, and efficiency of sending the service data is improved.

In a possible implementation, the first information includes a first sequence number and a service type of the first service, the first sequence number is a message sequence number of a first service request, and the first service request is a request of the gateway for requesting the first service from the server for the terminal device. In this way, the first service can be accurately identified on the server by the first sequence number and the service type.

In another possible implementation, the first information further includes a link identifier of a second link, the second link is a link between the gateway and the server, and the second link is used to transmit the service data of the first service. This can improve accuracy of identifying the first service on the server by the first information.

In another possible implementation, when the first link is congested, second information is obtained, where the second information identifies the first service on the gateway; and the first information is obtained based on a first correspondence and the second information, where the first correspondence includes the second information and the first information. The terminal device is located in the Internet, the server is located in a cloud, and the second information and the first information identify the first service in the Internet and the cloud respectively, so that security of the cloud can be improved.

In another possible implementation, the second information includes a second sequence number and a link identifier of the first link, the second sequence number is a message sequence number of a second service request, and the second service request is a request of the terminal device for requesting the first service from the gateway. In this way, the first service can be accurately identified on the gateway by the second sequence number and the link identifier of the first link.

In another possible implementation, the second information further includes the service type of the first service. This can improve accuracy of identifying the first service on the gateway by the second information.

In another possible implementation, the second service request from the terminal device is received, where the second service request includes the second information. The first service request is sent to the server based on the second information, where the first service request includes the first information, and the first service request is used to request the server to send the service data of the first service. In this way, the terminal device requests the first service from the gateway by using the second information, the gateway requests the first service from the server by using the first information, and the Internet and the cloud are isolated by using the first information and the second information, so that security of the cloud can be improved.

In another possible implementation, the first correspondence including the first information and the second information is stored. In this way, when the first link is congested, the gateway may obtain the second information identifying the first service on the gateway, to obtain the first information based on the second information and the first correspondence, and send the first information to the server, so that the server obtains the first service based on the first information. This can successfully reduce the rate at which the service data of the first service is sent.

In another possible implementation, when congestion of the first link stops, a second congestion notification message is sent to the server, where the second congestion notification message includes the first information, and the second congestion notification message indicates the server to increase, based on the first information, the rate at which the service data of the first service is sent. When congestion of the first link stops, the rate at which the server sends the service data of the first service can be appropriately increased, to improve efficiency of sending the service data.

According to a second aspect, this application provides a communication apparatus, configured to perform the method according to the first aspect or any one of the possible implementations of the first aspect. Specifically, the apparatus includes a unit configured to perform the method according to the first aspect or any one of the possible implementations of the first aspect.

According to a third aspect, this application provides a communication apparatus, including at least one processor and a memory. The at least one processor is configured to: couple to the memory, and read and execute instructions in the memory, to implement the method according to the first aspect or any one of the possible implementations of the first aspect.

According to a fourth aspect, this application provides a computer program product. The computer program product includes a computer program stored in a computer-readable storage medium, and the computer program is loaded by a processor, to implement the method according to the first aspect or any one of the possible implementations of the first aspect.

According to a fifth aspect, this application provides a computer-readable storage medium, configured to store a computer program. The computer program is loaded by a processor, to perform the method according to the first aspect or any one of the possible implementations of the first aspect.

According to a sixth aspect, this application provides a chip, including a memory and a processor. The memory is configured to store computer instructions, and the processor is configured to invoke the computer instructions from the memory and run the computer instructions, to perform the method according to the first aspect or any one of the possible implementations of the first aspect.

### BRIEF DESCRIPTION OF DRAWINGS

FIG. 1 is a diagram of a structure of a network architecture according to an embodiment of this application;
FIG. 2 is a diagram of a structure of another network architecture according to an embodiment of this application;
FIG. 3 is a diagram of a structure of another network architecture according to an embodiment of this application;
FIG. 4 is a flowchart of a communication method according to an embodiment of this application;
FIG. 5 is a diagram of a structure of another network architecture according to an embodiment of this application;
FIG. 6 is a diagram of a structure of a service request according to an embodiment of this application;
FIG. 7 is a diagram of a structure of another network architecture according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

Terms in embodiments of this application are as follows.

Both a first link and a second link are links used to transmit service data of a first service, the first service is a service requested by a terminal device, the first link is a link between a gateway and the terminal device, the second link is a link between the gateway and a server, and the second link and the first link are in a one-to-many relationship.

The service data is data of the first service. For example, when the first service is a video service, the service data of the first service is video data. For another example, when the first service is a voice service, the service data of the first service is voice data.

Both a first service request and a second service request are requests used to request the first service, the second service request is a request sent by the terminal device to the gateway, and the first service request is a request sent by the gateway to the server for the terminal device.

Both a first sequence number and a second sequence number are message sequence numbers of requests used to request the first service, the first sequence number is a message sequence number of the first service request, and the second sequence number is a message sequence number of the second service request.

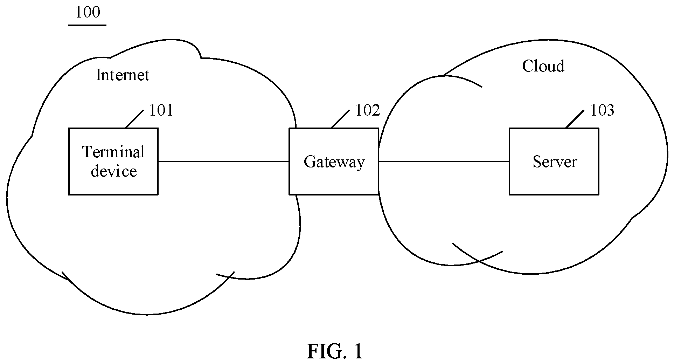

Refer to FIG. 1. An embodiment of this application provides a network architecture 100. The network architecture 100 includes a terminal device 101, a gateway 102, and a server 103. The terminal device 101 is located in the Internet, the server 103 is located in a cloud, and the gateway 102 is configured to connect the Internet to the cloud.

Optionally, because the gateway 102 is configured to connect the Internet to the cloud, the gateway 102 is deployed between the Internet and the cloud. The gateway 102 is an entry to the Internet for the cloud or an entry to the cloud for the Internet, and the gateway 102 may be referred to as a cloud gateway.

The terminal device 101 may communicate with the gateway 102, and the gateway 102 may communicate with the server 103.

For example, a first link is established between the terminal device 101 and the gateway 102, and a second link is established between the gateway 102 and the server 103. The terminal device 101 sends a second service request to the gateway 102 over the first link, where the second service request is used to request a first service. The gateway 102 receives the second service request, and sends a first service request to the server 103 over the second link based on the second service request, where the first service request is also used to request the first service.

The server 103 receives the first service request, determines the requested first service based on the first service request, and sends service data of the first service to the gateway 102 over the second link. The gateway 102 receives the service data of the first service, and sends the service data of the first service to the terminal device 101 over the first link.

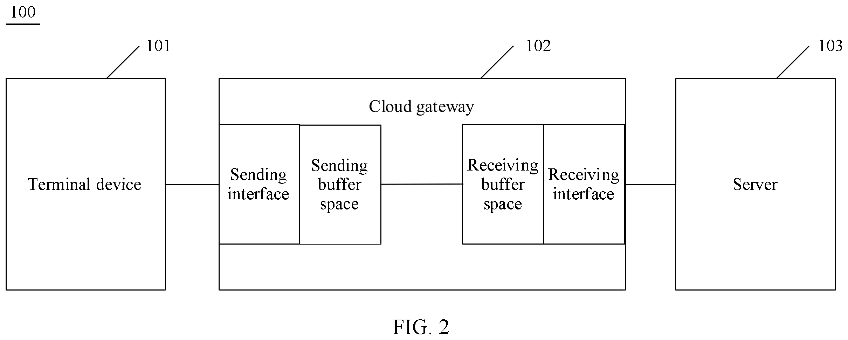

In some embodiments, with reference to FIG. 2, the gateway 102 includes a sending interface, a receiving interface, a sending buffer space corresponding to the first link, and a receiving buffer space corresponding to the second link. When receiving the service data of the first service over the second link through the receiving interface, the gateway 102 first buffers the service data of the first service in the receiving buffer space. The gateway 102 transfers the service data of the first service stored in the receiving buffer space to the sending buffer space, reads the service data of the first service from the sending buffer space, and sends the read service data to the terminal device 101 over the first link through the sending interface.

In some embodiments, the operation of transferring the service data of the first service stored in the receiving buffer space to the sending buffer space by the gateway 102 may be: The gateway 102 reads the service data of the first service from the receiving buffer space, and buffers the read service data in the sending buffer space.

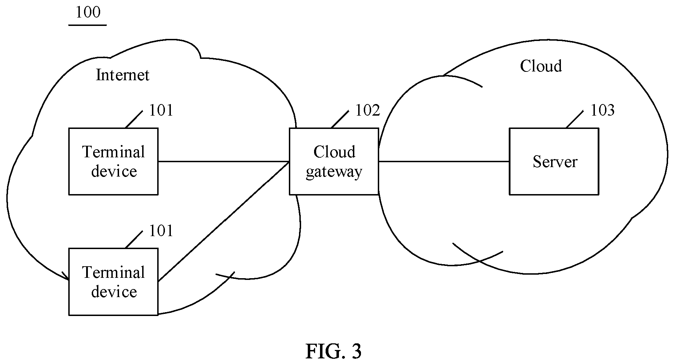

In some embodiments, with reference to FIG. 3, the network architecture 100 includes one or more terminal devices 101. When the network architecture 100 includes a plurality of terminal devices 101, the first link may be established between each terminal device 101 and the gateway 102. In the plurality of terminal devices 101, there is at least one terminal device 101 that corresponds to the second link between the gateway 102 and the server 103.

The second link is used to transmit data of the at least one terminal device 101. For example, for each of the at least one terminal device 101, the server 103 may send, to the gateway 102 over the second link, service data of a service requested by the terminal device 101. The gateway 102 receives the service data, and sends the service data to the terminal device 101 over the first link between the gateway 102 and the terminal device 101.

In some embodiments, one second link or a plurality of second links may be established between the gateway 102 and the server 103. For each second link between the gateway 102 and the server 103, the second link corresponds to at least one terminal device 101, and is used to transmit data of the at least one terminal device 101.

Because a transmission rate of the cloud is greater than a transmission rate of the Internet, the first link between the terminal device 101 and the gateway 102 is located in the Internet, and the second link between the gateway 102 and the server 103 is located in the cloud, bandwidth of the second link is usually greater than bandwidth of the first link. As a result, a rate at which the server 103 sends the service data of the first service to the gateway 102 over the second link is greater than a rate at which the gateway 102 sends the service data of the first service to the terminal device 101 over the first link. In other words, a rate at which the gateway 102 receives the service data of the first service over the second link is greater than the rate at which the gateway 102 sends the service data of the first service over the first link. Consequently, the sending buffer space corresponding to the first link in the gateway 102 may be gradually full of the service data of the first service. When the sending buffer space is full of the service data of the first service, it indicates that the first link between the gateway 102 and the terminal device 101 is already congested.

When the first link between the gateway 102 and the terminal device 101 is congested, congestion may be resolved by reducing the rate at which the server 103 sends the service data of the first service. In this way, the gateway 102 can read the service data of the first service from the sending buffer space in time, and send the read service data to the terminal device 101 over the first link, so that the sending buffer space is not full of the service data of the first service, and congestion of the first link between the gateway 102 and the terminal device 101 stops.

The rate at which the server 103 sends the service data of the first service may be reduced in the following manner. In this manner, with reference to FIG. 2, the gateway 102 receives, over the second link through the receiving interface, the service data of the first service sent by the server 103, and buffers the service data of the first service in the receiving buffer space. The service data of the first service buffered in the receiving buffer space is transferred to the sending buffer space. Then, the service data of the first service is read from the sending buffer space, and the read service data is sent to the terminal device 101 over the first link through the sending interface. The terminal device 101 receives the service data of the first service over the first link.

When the rate at which the gateway 102 receives the service data of the first service over the second link is greater than the rate at which the service data of the first service is sent over the first link, the sending buffer space in the gateway 102 is gradually full of the service data of the first service. When the sending buffer space is full of the service data of the first service, the gateway 102 detects that the first link is congested, and stops transferring the service data of the first service buffered in the receiving buffer space to the sending buffer space.

However, the gateway 102 continues to receive, through the receiving interface, the service data of the first service sent by the server 103 over the second link, and stores the received service data in the receiving buffer space. As a result, the receiving buffer space is also gradually full of the service data of the first service. When the receiving buffer space is full of the service of the first service, the gateway 102 discards the service data of the first service received over the second link through the receiving interface. In this case, the server 103 detects that the gateway 102 discards the service data of the first service, learns that the first link between the gateway 102 and the terminal device 101 is congested, and reduces the rate at which the service data of the first service is sent to the gateway 102 over the second link.

When the server 103 reduces the rate at which the service data of the first service is sent to the gateway 102 over the second link, the rate at which the gateway 102 receives the service data of the first service over the second link through the receiving interface is also reduced, and the gateway 102 also reduces a rate at which the service data of the first service is transferred from the receiving buffer space to the sending buffer space. In this way, the sending buffer space is not continuously full of the service data of the first service, and congestion of the first link between the gateway 102 and the terminal device 101 stops.

Although this manner can resolve congestion of the first link between the gateway 102 and the terminal device 101, there is a long delay and the gateway 102 discards service data. A reason for the delay is that when it is found that the first link between the gateway 102 and the terminal device 101 is congested, the server 103 needs to wait until the receiving buffer space in the gateway 102 is full of the service data of the first service before reducing sending of the service data of the first service.

To resolve congestion of the first link between the gateway 102 and the terminal device 101 and avoid the foregoing delay and a case in which the gateway 102 discards service data, in embodiments of this application, congestion of the first link between the gateway 102 and the terminal device 101 may be resolved by using any one of the following embodiments.

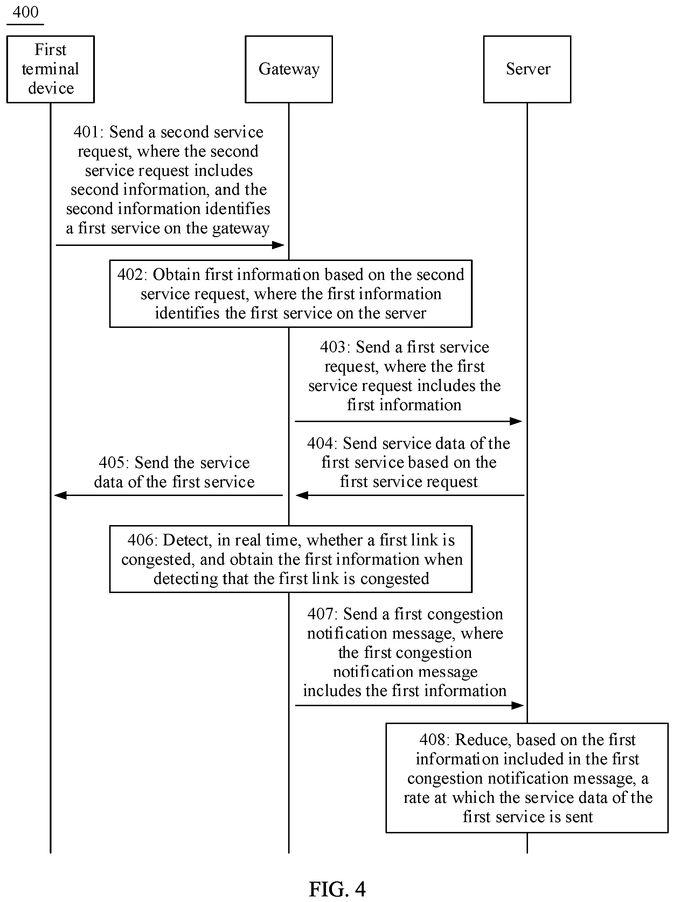

Refer to FIG. 4. An embodiment of this application provides a communication method 400. The communication method 400 is applied to the network architecture 100 shown in FIG. 1, FIG. 2, or FIG. 3. The communication method 400 includes the following procedure.

Step 401: A first terminal device sends a second service request to a gateway, where the second service request includes second information, and the second information identifies a first service on the gateway.

The first service is a service that the first terminal device needs to request, by using the second service request, from the gateway for download. A server includes service data of the first service.

In step 401, the first terminal device establishes a first link with the gateway, and sends the second service request to the gateway over the first link, where an application layer protocol header of the second service request includes the second information.

In some embodiments, the second information includes a second sequence number and a link identifier of the first link, the second sequence number is a message sequence number of the second service request, and the second sequence number is allocated by the first terminal device for the second service request. Optionally, the second information may further include a service type of the first service.

The network architecture 100 may further include a terminal device other than the first terminal device, and the terminal device may also send a service request to the gateway, to request a service from the gateway for download. The service request also includes a message sequence number allocated by the terminal device, and the message sequence number may be the same as or different from the second sequence number.

The first link is a link between the first terminal device and the gateway, and the second sequence number identifies the second service request sent by the first terminal device to the gateway over the first link. Therefore, the gateway may identify, by using the link identifier of the first link and the second sequence number, the first service requested by the first terminal device. In this way, the first service requested by the first terminal device from the gateway may be identified on the gateway by the second information.

The first terminal device includes an application, and the service type of the first service may be provided by the application. The second sequence number may be allocated by the first terminal device for the second service request.

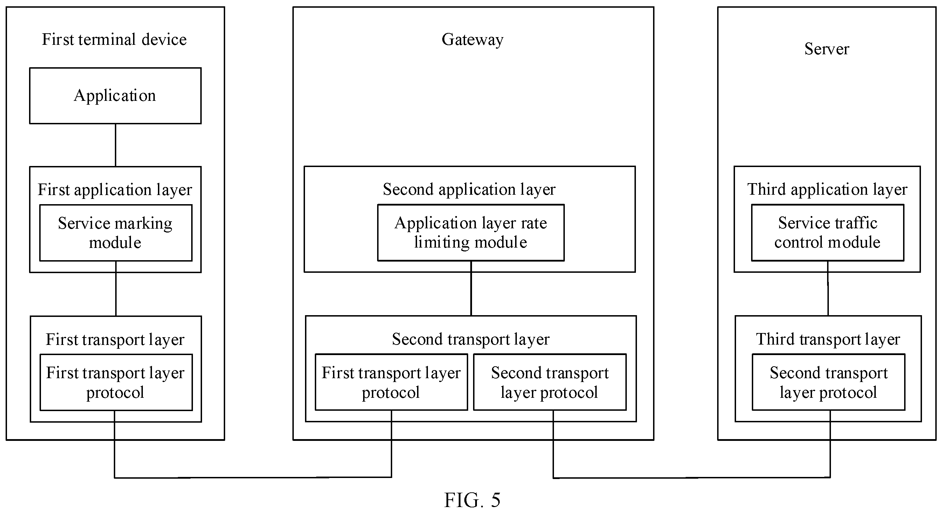

In some embodiments, with reference to FIG. 5, the first terminal device includes an application, a first application layer, and a first transport layer, the first application layer includes a service marking module, and the first transport layer includes a first transport layer protocol. When the application in the first terminal device needs the service data of the first service, the application transmits the service type of the first service to the first application layer. The second service request is generated in the first application layer. The service marking module allocates the second sequence number for the second service request. An application layer protocol header is added to a header part of the second service request. The application layer protocol header includes the second information. In other words, the application layer protocol header includes the second sequence number and the link identifier of the first link. Optionally, the application layer protocol header may further include the service type of the first service. The second service request is transmitted to the first transport layer. In the first transport layer, the second service request is sent to the gateway over the first link based on the first transport layer protocol in the first transport layer.

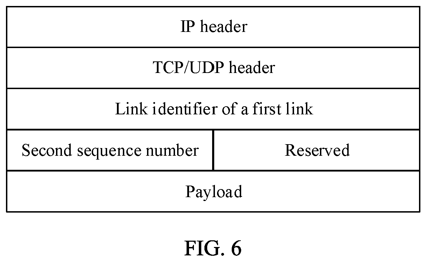

Refer to the second service request shown in FIG. 6. The second service request includes a header part and a payload part. The header part includes an internet protocol (internet protocol, IP) header, a transmission control protocol/user datagram protocol (transmission control protocol/user datagram protocol, TCP/UDP) header, and an application layer protocol header. The application layer protocol header includes the second information (for example, the link identifier of the first link, the second sequence number, and the service type of the first service in FIG. 6). Optionally, the second service request may further include a reserved field, and the payload part includes information such as a service identifier of the first service that the terminal device needs to request.

Optionally, the first link may be a session (session), and the link identifier of the first link may be a session identifier (session ID), or the like.

Step 402: The gateway receives the second service request, and obtains first information based on the second service request, where the first information identifies the first service on the server.

The first information includes a first sequence number and the service type of the first service, the first sequence number is a message sequence number of a first service request, and the first service request is a request of the gateway for requesting the first service from the server for the first terminal device.

Optionally, the first information further includes a link identifier of a second link, the second link is a connection between the gateway and the server, the second link is used to transmit data of at least one terminal device, the at least one terminal device includes the first terminal device, and data of the first terminal device includes the service data of the first service. In other words, the second link is used to transmit the service data of the first service.

Optionally, when there is one second link between the gateway and the server, the first information may include the link identifier of the second link, or may not include the link identifier of the second link. When there are a plurality of second links between the gateway and the server, the first terminal device corresponds to one of the second links, the second link is used to transmit the data of the first terminal device, and the first information includes a link identifier of the second link corresponding to the first terminal device.

In step 402, the gateway may establish the second link with the server, the second link corresponds to at least one terminal device, the at least one terminal device includes the first terminal device, and the second link may be used to transmit data of the at least one terminal device between the gateway and the server. The gateway obtains the service type of the first service based on the second service request, and allocates the first sequence number for the first service request based on the service type of the first service. In this way, the first sequence number and the service type of the first service that are included in the first information are obtained, or the link identifier of the second link included in the first information may be further obtained.

The first sequence number identifies the first service request sent by the gateway to the server over the second link. When there is one second link between the gateway and the server, the gateway may send service requests to the server for different terminal devices over the second link, to request services for the different terminal devices. For a plurality of service requests for requesting different services, the gateway may allocate a same message sequence number or different message sequence numbers for the plurality of service requests. For a plurality of service requests for requesting a same service, the gateway allocates different message sequence numbers for the plurality of service requests. Therefore, the gateway may identify, to the server by using the first sequence number and the service type of the first service, the first service requested for the first terminal device. In other words, the server may identify, by using the first sequence number and the service type of the first service, the first service requested by the gateway for the first terminal device. Therefore, the first information may identify the first service on the server.

When there are a plurality of second links between the gateway and the server, the gateway may send service requests to the server for different terminal devices over a second link, to request services for the different terminal devices. For a plurality of service requests for requesting different services over a same second link, the gateway may allocate a same message sequence number or different message sequence numbers for the plurality of service requests. For a plurality of service requests for requesting a same service over a same second link, the gateway allocates different message sequence numbers for the plurality of service requests.

For a plurality of service requests for requesting services over different second links, regardless of whether the services requested by the plurality of service requests are the same, the gateway may allocate a same message sequence number or different message sequence numbers for the plurality of service requests. Therefore, the gateway may identify, to the server by using the first sequence number, the service type of the first service, and the link identifier of the second link corresponding to the first terminal device, the first service requested for the first terminal device. In other words, the server may identify, by using the first sequence number, the service type of the first service, and the link identifier of the second link corresponding to the first terminal device, the first service requested by the gateway for the first terminal device. Therefore, the first information may identify the first service on the server.

Optionally, an application layer protocol header of the first service request includes the service type of the first service, and the gateway obtains the service type of the first service from the application layer protocol header of the first service request.

Optionally, a payload part of the first service request includes a service identifier of the first service, and the gateway obtains the service identifier of the first service from the payload part of the first service request, and obtains the service type of the first service based on the service identifier of the first service.

Optionally, the second link may be a session, and the link identifier of the second link may be a session ID.

In some embodiments, the gateway obtains the second information from the second service request, and stores a correspondence between the second information and the first information in the correspondence between the second information and the first information.

In some embodiments, with reference to FIG. 5, the gateway includes a second transport layer and a second application layer, the second transport layer includes a first transport layer protocol, and the second application layer includes an application layer rate limiting module. The gateway receives the second service request over the first link based on the first transport layer protocol in the second transport layer, and transmits the second service request to the second application layer. In the second application layer, the application layer rate limiting module obtains the first information based on the second service request, obtains the second information included in the second service request, and stores the correspondence between the second information and the first information in the correspondence between the second information and the first information.

Step 403: The gateway sends the first service request to the server, where the first service request includes the first information.

In step 403, the gateway obtains the first service request based on the second service request, and sends the first service request to the server over the second link.

In some embodiments, with reference to FIG. 5, the second transport layer in the gateway further includes a second transport layer protocol. In the second application layer of the gateway, the application layer rate limiting module updates the second information included in the application layer protocol header of the second service request to the first information to obtain the first service request, and transmits the first service request to the second transport layer of the gateway. In the second transport layer, the first service request is sent to the server over the second link based on the second transport layer protocol in the second transport layer.

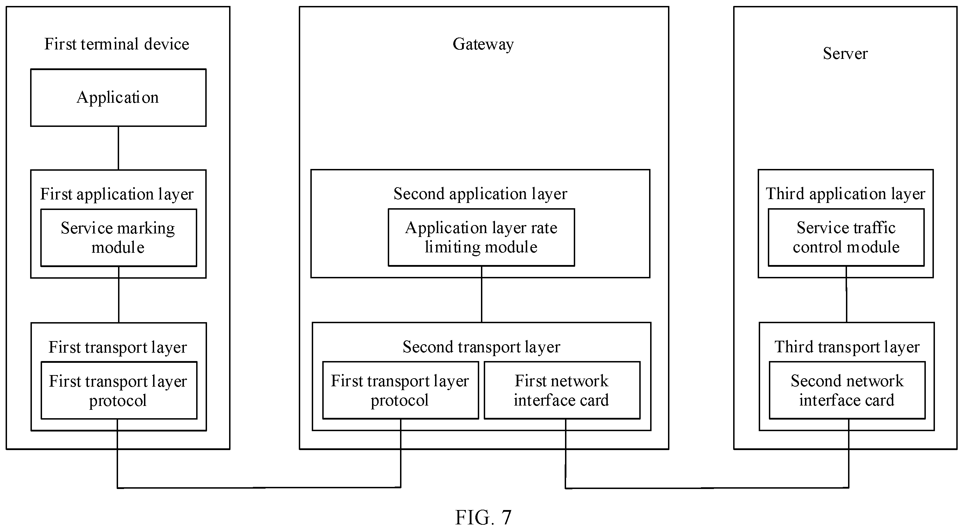

In some embodiments, with reference to FIG. 7, the second transport layer in the gateway further includes a first network interface card. In the second application layer of the gateway, the application layer rate limiting module updates the second information included in the application layer protocol header of the second service request to the first information to obtain the first service request, and transmits the first service request to the second transport layer of the gateway. In the second transport layer, the first service request is sent to the server over the second link through the first network interface card in the second transport layer. Optionally, the first network interface card may be a remote direct memory access (remote direct memory access, RDMA) network interface card, another network interface card, or the like.

Optionally, the operation of updating the second information included in the application layer protocol header of the second service request to the first information by the application layer rate limiting module may be: The application layer rate limiting module updates the link identifier of the first link included in the application layer protocol header of the second service request to the link identifier of the second link, and/or updates the second sequence number included in the application layer protocol header of the second service request to the first sequence number, to obtain the first service request.

Step 404: The server receives the first service request, and sends the service data of the first service to the gateway based on the first service request.

In step 404, the server receives the first service request over the second link, where the payload of the first service request includes the service identifier of the first service, obtains the service data of the first service based on the service identifier of the first service, and sends the service data of the first service to the gateway over the second link. Optionally, the service data of the first service may include the first information.

In some embodiments, the application layer protocol header of the first service request includes the first information, and the server further correspondingly stores the first information and the service identifier of the first service in a correspondence between the first information and the service identifier.

In some embodiments, with reference to FIG. 5, the server includes a third transport layer and a third application layer, the third transport layer includes a second transport layer protocol, and the third application layer includes a service traffic control module. The server receives the first service request over the second link based on the second transport layer protocol in the third transport layer, and transmits the first service request to the third application layer. In the third application layer, the service traffic control module obtains the first information and the service identifier of the first service from the first service request, obtains the service data of the first service based on the service identifier of the first service, sends the service data of the first service to the gateway over the second link, and correspondingly stores the first information and the service identifier of the first service in the correspondence between the first information and the service identifier.

In some embodiments, with reference to FIG. 7, the server includes a third transport layer and a third application layer, the third transport layer includes a second network interface card, and the third application layer includes a service traffic control module. The server receives the first service request over the second link through the second network interface card in the third transport layer, and transmits the first service request to the third application layer. In the third application layer, the service traffic control module obtains the first information and the service identifier of the first service from the first service request, obtains the service data of the first service based on the service identifier of the first service, sends the service data of the first service to the gateway over the second link through the second network interface card, and correspondingly stores the first information and the service identifier of the first service in the correspondence between the first information and the service identifier.

In some embodiments, the first transport layer protocol in the first transport layer and the first transport layer protocol in the second transport layer are transport layer protocols of a same type or different types. The second transport layer protocol in the second transport layer and the second transport layer protocol in the third transport layer are transport layer protocols of a same type.

Step 405: The gateway receives the service data of the first service, and sends the service data of the first service to the first terminal device.

In step 405, the gateway receives the service data of the first service, obtains the first information from the service data of the first service, and obtains the corresponding second information from the correspondence between the second information and the first information based on the first information. The first link is obtained based on the link identifier of the first link between the gateway and the terminal device included in the second information, and the service data of the first service is sent to the first terminal device over the first link.

In some embodiments, the gateway includes a receiving interface, a sending interface, a sending buffer space corresponding to the first link, and a receiving buffer space corresponding to the second link. The gateway receives the service data of the first service over the second link through the receiving interface, and buffers the service data of the first service in the receiving buffer space. The service data of the first service is read from the receiving buffer space, the first information is obtained from the read service data, and the corresponding second information is obtained from the correspondence between the second information and the first information based on the first information. The first information included in the read service data is updated to the second information, and updated service data is buffered in the sending buffer space. The service data of the first service is read from the sending buffer space, and the read service data is sent to the first terminal device over the first link through the sending interface.

The server may continuously send the service data of the first service to the gateway over the second link, and the gateway continuously forwards the service data of the first service to the first terminal device over the first link. Because the second link between the gateway and the server is located in a cloud, the first link between the gateway and the first terminal device is located in the Internet, and a transmission rate of the cloud is greater than a transmission rate of the Internet, bandwidth of the second link is greater than bandwidth of the first link. As a result, a rate at which the service data of the first service is transmitted over the second link is greater than a rate at which the service data of the first service is transmitted over the first link. This causes the first link between the gateway and the first terminal device to be congested. To stop congestion, the server may reduce a rate at which the service data of the first service is sent. When the rate at which the server sends the service data of the first service is less than the rate at which the service data of the first service is transmitted over the first link, congestion of the first link stops. Next, congestion may be stopped by using the following procedure.

Step 406: The gateway detects, in real time, whether the first link between the gateway and the first terminal device is congested, and obtains the first information when detecting that the first link is congested.

In step 406, when detecting that the first link is congested, the gateway obtains the second information, and obtains the corresponding first information from the correspondence between the second information and the first information based on the second information.

In some embodiments, the gateway detects the sending buffer space corresponding to the first link, detects that the first link is congested when detecting that the sending buffer space is already full of the service data of the first service, obtains the link identifier of the first link, and obtains the second sequence number corresponding to the first service, to obtain the second information. The second information includes the second sequence number and the link identifier of the first link.

Optionally, the service type of the first service may be further obtained, and the second information further includes the service type of the first service.

In some embodiments, the service data of the first service stored in the sending buffer space includes the second information. The gateway may obtain, from the service data stored in the sending buffer space, the link identifier of the first link and the second sequence number corresponding to the first service, or further obtain the service type of the first service, to obtain the second information.

Step 407: The gateway sends a first congestion notification message to the server, where the first congestion notification message includes the first information.

The first congestion notification message indicates the server to reduce, based on the first information, the rate at which the service data of the first service is sent.

In step 407, when there is one second link between the gateway and the server, the gateway sends the first congestion notification message to the server over the second link. When there are a plurality of second links between the gateway and the server, the first information includes a link identifier of a second link corresponding to the first terminal device, and the gateway obtains the second link based on the link identifier of the second link, and sends the first congestion notification message to the server over the second link.

Step 408: The server receives the first congestion notification message, and reduces, based on the first information included in the first congestion notification message, the rate at which the service data of the first service is sent.

In step 408, the server receives the first congestion notification message, obtains the first information from the first congestion notification message, obtains the service identifier of the first service from the correspondence between the first information and the service identifier based on the first information, and reduces, based on the service identifier of the first service, the rate at which the service data of the first service is sent.

In some embodiments, the server sends the service data of the first service to the gateway at a first rate. When receiving the first congestion notification message, the server reduces the first rate to obtain a second rate, and then sends the service data of the first service to the gateway at the second rate.

Optionally, the server reduces the first rate by a first offset to obtain the second rate.

If the first link between the gateway and the first terminal device is still congested after the server reduces the rate at which the service data of the first service is sent, when the gateway detects that the first link is still congested, the gateway continues to send the first congestion notification message to the server. After receiving the first congestion notification message, the server continues to reduce the rate at which the service data of the first service is sent, until the rate at which the server sends the service data of the first service is less than the rate at which the service data of the first service is transmitted over the first link, to stop congestion of the first link.

In some embodiments, when congestion of the first link stops, the gateway obtains the first information, and sends a second congestion notification message to the server, where the second congestion notification message includes the first information. The server receives the second congestion notification message, obtains the first information included in the second congestion notification message, and increases, based on the first information, the rate at which the service data of the first service is sent.

For an operation of obtaining the first information by the gateway, refer to the operation of obtaining the first information in step 406. Details are not described herein.

Optionally, it is assumed that the server sends the service data of the first service at the second rate, and when receiving the second congestion notification message, the server increases the second rate to obtain a third rate, and then sends the service data of the first service to the gateway at the third rate.

Optionally, the server increases the second rate by a second offset to obtain the third rate. The first offset and the second offset may be equal or may not be equal.

The Internet is a shared network, bandwidth in the Internet is shared, and the bandwidth of the first link established between the first terminal device and the gateway in the Internet dynamically changes. When congestion of the first link stops, the bandwidth of the first link may increase, and the gateway sends the second congestion notification message to the server, so that the server increases, based on the second congestion notification message, the rate at which the service data of the first service is sent, to improve efficiency of sending the service data.

In some embodiments, if the first link is congested again after the server increases the rate at which the service data of the first service is sent, the gateway sends the first congestion notification message to the server. The server receives the first congestion notification message, and reduces, based on the first information included in the first congestion notification message, the rate at which the service data of the first service is sent.

It is assumed that before the server increases the rate at which the service data of the first service is sent, the rate at which the server sends the service data of the first service is equal to the second rate, and after the server increases the rate at which the service data of the first service is sent, the rate at which the server sends the service data of the first service is equal to the third rate. If the first link is congested again when the server sends the service data of the first service at the third rate, it indicates that the rate at which the service data of the first service is transmitted over the first link is between the second rate and the third rate. After the server receives the first congestion notification message, and reduces, based on the first information included in the first congestion notification message, the rate at which the service data of the first service is sent, a reduced rate may be equal to the second rate. Then, sending of the service data of the first service is maintained at the reduced rate. In this way, the server does not dynamically change the rate at which the service data of the first service is sent, so that communication resources can be saved and communication stability can be saved.

In embodiments of this application, when detecting that the first link between the gateway and the first terminal device is congested, the gateway obtains the first information, where the first information identifies the first service on the server, and sends the first congestion notification message to the server. The server receives the first congestion notification message, and reduces, based on the first information included in the first congestion notification message, the rate at which the service data of the first service is sent. For the first link established between the gateway and the first terminal device in the Internet, after the server reduces the rate at which the service data of the first service is sent, when the reduced rate is less than the rate at which the service data of the first service is transmitted over the first link, congestion of the first link stops. In this way, even if the bandwidth of the first link dynamically changes, congestion of the first link can be resolved, to stop congestion of the first link. Because the gateway sends the first congestion notification message to the server when detecting that the first link is congested, the server does not need to wait until the receiving buffer space in the gateway is full before reducing the rate at which the service data of the first service is sent, so that there is no delay. Because the server reduces the rate at which the service data of the first service is sent after receiving the first congestion notification message, the gateway does not discard the service data of the first service, so that the server does not need to resend discarded service data of the first service, and efficiency of sending the service data of the first service is not reduced.

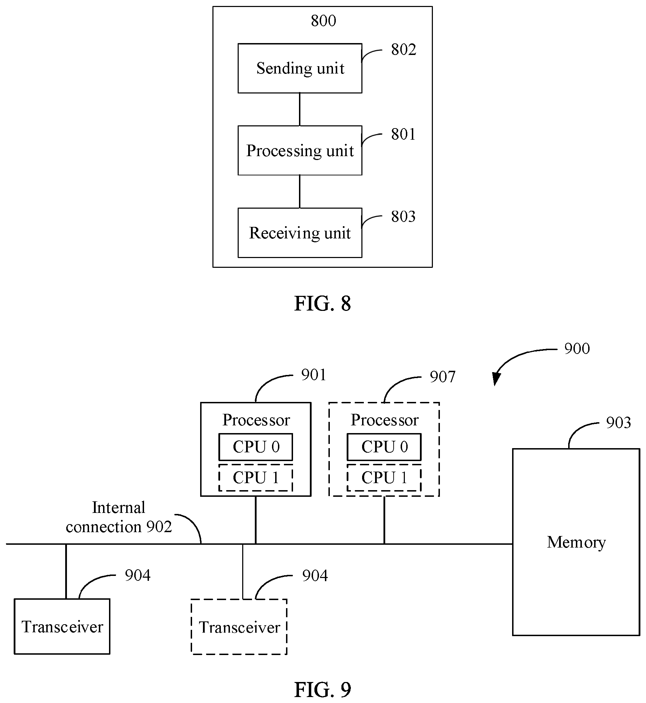

Refer to FIG. 8. An embodiment of this application provides a communication apparatus 800. Service data of a first service is transmitted between a server and a terminal device via the apparatus 800. The apparatus 800 is deployed on the gateway in any one of the foregoing embodiments. For example, the apparatus 800 is deployed on the gateway in the network architecture 100 shown in FIG. 1, FIG. 2, or FIG. 3, or the apparatus 800 is deployed on the gateway in the method 400 shown in FIG. 4. The apparatus 800 includes:
a processing unit 801, configured to: when a first link between the apparatus 800 and the terminal device is congested, obtain first information, where the first information identifies the first service on the server; and
a sending unit 802, configured to send a first congestion notification message to the server, where the first congestion notification message includes the first information, and the first congestion notification message indicates the server to reduce, based on the first information, a rate at which the service data of the first service is sent.

Optionally, for a detailed implementation process in which the processing unit 801 obtains the first information, refer to related content in step 406 of the method 400 shown in FIG. 4. Details are not described herein again.

Optionally, for a detailed implementation process in which the sending unit 802 sends the first congestion notification message to the server, refer to related content in step 407 of the method 400 shown in FIG. 4. Details are not described herein again.

Optionally, the first information includes a first sequence number and a service type of the first service, the first sequence number is a message sequence number of a first service request, and the first service request is a request of the apparatus 800 for requesting the first service from the server for the terminal device.

Optionally, the first information further includes a link identifier of a second link, the second link is a link between the apparatus 800 and the server, and the second link is used to transmit the service data of the first service.

Optionally, the processing unit 801 is configured to:
when the first link is congested, obtain second information, where the second information identifies the first service on the apparatus 800; and
obtain the first information based on a first correspondence and the second information, where the first correspondence includes the second information and the first information.

Optionally, for a detailed implementation process in which the processing unit 801 obtains the second information, refer to related content in step 406 of the method 400 shown in FIG. 4. Details are not described herein again.

Optionally, for a detailed implementation process in which the processing unit 801 obtains the first information based on the first correspondence and the second information, refer to related content in step 406 of the method 400 shown in FIG. 4. Details are not described herein again.

Optionally, the second information includes a second sequence number and a link identifier of the first link, the second sequence number is a message sequence number of a second service request, and the second service request is a request of the terminal device for requesting the first service from the apparatus 800.

Optionally, the second information further includes the service type of the first service.

Optionally, the apparatus 800 further includes a receiving unit 803.

The receiving unit 803 is configured to receive the second service request from the terminal device, where the second service request includes the second information.

The sending unit 802 is further configured to send the first service request to the server based on the second information, where the first service request includes the first information, and the first service request is used to request the server to send the service data of the first service.

Optionally, for a detailed implementation process in which the receiving unit 803 receives the second service request from the terminal device, refer to related content in step 402 of the method 400 shown in FIG. 4. Details are not described herein again.

Optionally, for a detailed implementation process in which the sending unit 802 sends the first service request to the server based on the second information, refer to related content in step 403 of the method 400 shown in FIG. 4. Details are not described herein again.

Optionally, the processing unit 801 is further configured to store the first correspondence including the first information and the second information.

Optionally, for a detailed implementation process in which the processing unit 801 stores the first correspondence including the first information and the second information, refer to related content in step 402 of the method 400 shown in FIG. 4. Details are not described herein again.

Optionally, the sending unit 802 is further configured to:
when congestion of the first link stops, send a second congestion notification message to the server, where the second congestion notification message includes the first information, and the second congestion notification message indicates the server to increase, based on the first information, the rate at which the service data of the first service is sent.

Optionally, for a detailed implementation process in which the sending unit 802 sends the second congestion notification message to the server, refer to related content in step 408 of the method 400 shown in FIG. 4. Details are not described herein again.

In this embodiment of this application, when the first link is congested, the sending unit sends the first congestion notification message to the server, where the first congestion notification message includes the first information identifying the first service on the server. In this way, the server can actively reduce, based on the first information, the rate at which the service data of the first service is sent, so that the rate at which the server sends the service data of the first service is less than a rate at which the service data of the first service is transmitted over the first link, to stop congestion of the first link. Because when the first link is congested, the server actively reduces, based on the first information, the rate at which the service data of the first service is sent, the apparatus does not need to discard the service data, so that the server does not need to resend the service data, and efficiency of sending the service data is improved.

FIG. 9 is a diagram of a communication apparatus 900 according to an embodiment of this application. The apparatus 900 may be the gateway provided in any one of the foregoing embodiments, for example, may be the gateway in the network architecture 100 shown in FIG. 1, FIG. 2, or FIG. 3, or may be the gateway in the method 400 shown in FIG. 4. The apparatus 900 includes at least one processor 901, an internal connection 902, a memory 903, and at least one transceiver 904.

The apparatus 900 is an apparatus of a hardware structure, and may be configured to implement functional modules in the apparatus 800 shown in FIG. 8.

For example, a person skilled in the art may figure out that the processing unit 801 in the apparatus 800 shown in FIG. 8 may be implemented by the at least one processor 901 by invoking code in the memory 903, and the sending unit 802 and the receiving unit 803 in the apparatus 800 shown in FIG. 8 may be implemented by the at least one transceiver 904.

The apparatus 900 may be further configured to implement a function of the gateway in any one of the foregoing embodiments.

The processor 901 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The internal connection 902 may include a path for transmitting information between the foregoing components. The internal connection 902 may be a board, a bus, or the like.

The at least one transceiver 904 is configured to communicate with another device or a communication network.

The memory 903 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor through the bus. The memory may alternatively be integrated with the processor.

The memory 903 is configured to store application program code for executing the solutions of this application, and the processor 901 controls execution. The processor 901 is configured to: execute the application program code stored in the memory 903, and cooperate with the at least one transceiver 904, so that the apparatus 900 implements functions in the method in this patent.

During specific implementation, in an embodiment, the processor 901 may include one or more CPUs, for example, a CPU 0 and a CPU 1 in FIG. 9.

During specific implementation, in an embodiment, the apparatus 900 may include a plurality of processors, for example, the processor 901 and a processor 907 shown in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, improvement, or the like made within the principle of this application shall fall within the protection scope of this application.

## Claims

1. A communication method, wherein the method is applied to a gateway, and service data of a first service is transmitted between a server and a terminal device via the gateway, and the method comprises:
when a first link between the gateway and the terminal device is congested, obtaining first information, wherein the first information identifies the first service on the server; and
sending a first congestion notification message to the server, wherein the first congestion notification message comprises the first information, and the first congestion notification message indicates the server to reduce, based on the first information, a rate at which the service data of the first service is sent.

2. The method according to claim 1, wherein the first information comprises a first sequence number and a service type of the first service, the first sequence number is a message sequence number of a first service request, and the first service request is a request of the gateway for requesting the first service from the server for the terminal device.

3. The method according to claim 2, wherein the first information further comprises a link identifier of a second link, the second link is a link between the gateway and the server, and the second link is used to transmit the service data.

4. The method according to any one of claims 1 to 3, wherein the method further comprises:
when the first link is congested, obtaining second information, wherein the second information identifies the first service on the gateway; and
obtaining the first information comprises:
obtaining the first information based on a first correspondence and the second information, wherein the first correspondence comprises the second information and the first information.

5. The method according to claim 4, wherein the second information comprises a second sequence number and a link identifier of the first link, the second sequence number is a message sequence number of a second service request, and the second service request is a request of the terminal device for requesting the first service from the gateway.

6. The method according to claim 5, wherein the second information further comprises the service type of the first service.

7. The method according to any one of claims 4 to 6, wherein the method further comprises:
receiving the second service request from the terminal device, wherein the second service request comprises the second information; and
sending the first service request to the server based on the second information, wherein the first service request comprises the first information, and the first service request is used to request the server to send the service data of the first service.

8. The method according to claim 7, wherein the method further comprises:
storing the first correspondence comprising the first information and the second information.

9. The method according to any one of claims 1 to 8, wherein the method further comprises:
when congestion of the first link stops, sending a second congestion notification message to the server, wherein the second congestion notification message comprises the first information, and the second congestion notification message indicates the server to increase, based on the first information, the rate at which the service data of the first service is sent.

10. A communication apparatus, wherein service data of a first service is transmitted between a server and a terminal device via the apparatus, and the apparatus comprises:
a processing unit, configured to: when a first link between the apparatus and the terminal device is congested, obtain first information, wherein the first information identifies the first service on the server; and
a sending unit, configured to send a first congestion notification message to the server, wherein the first congestion notification message comprises the first information, and the first congestion notification message indicates the server to reduce, based on the first information, a rate at which the service data of the first service is sent.

11. The apparatus according to claim 10, wherein the first information comprises a first sequence number and a service type of the first service, the first sequence number is a message sequence number of a first service request, and the first service request is a request of the apparatus for requesting the first service from the server for the terminal device.

12. The apparatus according to claim 11, wherein the first information further comprises a link identifier of a second link, the second link is a link between the apparatus and the server, and the second link is used to transmit the service data.

13. The apparatus according to any one of claims 10 to 12, wherein the processing unit is configured to:
when the first link is congested, obtain second information, wherein the second information identifies the first service on the apparatus; and
obtain the first information based on a first correspondence and the second information, wherein the first correspondence comprises the second information and the first information.

14. The apparatus according to claim 13, wherein the second information comprises a second sequence number and a link identifier of the first link, the second sequence number is a message sequence number of a second service request, and the second service request is a request of the terminal device for requesting the first service from the apparatus.

15. The apparatus according to claim 14, wherein the second information further comprises the service type of the first service.

16. The apparatus according to any one of claims 13 to 15, wherein the apparatus further comprises a receiving unit;
the receiving unit is configured to receive the second service request from the terminal device, wherein the second service request comprises the second information; and
the sending unit is further configured to send the first service request to the server based on the second information, wherein the first service request comprises the first information, and the first service request is used to request the server to send the service data of the first service.

17. The apparatus according to claim 16, wherein the processing unit is further configured to store the first correspondence comprising the first information and the second information.

18. The apparatus according to any one of claims 10 to 17, wherein the sending unit is further configured to:
when congestion of the first link stops, send a second congestion notification message to the server, wherein the second congestion notification message comprises the first information, and the second congestion notification message indicates the server to increase, based on the first information, the rate at which the service data of the first service is sent.

19. A communication device, comprising at least one processor and at least one memory, wherein the at least one memory stores computer-readable instructions, and the at least one processor executes the computer-readable instructions, to enable the communication device to perform the method according to any one of claims 1 to 9.

20. A computer storage medium, storing a computer program, wherein when the computer program is executed by a processor, the method according to any one of claims 1 to 9 is implemented.

21. A computer program product, comprising a computer program, wherein when the computer program is executed by a processor, the method according to any one of claims 1 to 9 is implemented.
